# EUROPÄISCHE PATENTSCHRIFT

(11) **EP 3 120 689 B1**
(45) Veröffentlichungstag und Bekanntmachung des Hinweises auf die Patenterteilung: **29.08.2018**
(21) Anmeldenummer: 16179651.1
(22) Anmeldetag: 15.07.2016
(51) Int. Cl.: A01F 15/07, A01F 15/18, B65G 45/12, B08B 1/02, B08B 1/00

(54) **KRATZLEISTE, ABSTREIFEREINRICHTUNG UND LANDWIRTSCHAFTLICHE RUNDBALLENPRESSE MIT EINER SOLCHEN**
SCRATCH STRIP, SCRAPER DEVICE AND AGRICULTURAL ROUND BALER WITH SAME
BARRE GRATTOIR, RACLEUR ET PRESSE A BALLES RONDES AGRICOLE LE COMPRENANT

(30) Priorität: 22.07.2015 DE 102015213854
(43) Veröffentlichungstag der Anmeldung: 25.01.2017
(73) Patentinhaber: Deere & Company, Moline, IL 61265 (US)
(72) Erfinder: Dutertre, Matthieu, 25320 Chemaudin (FR)
(74) Vertreter: Reichert, Christian

(56) Entgegenhaltungen:
- CA-A1- 2 547 896
- DE-U1- 29 515 629
- GB-A- 2 143 792
- US-A- 4 633 659
- US-A- 5 191 833

## Beschreibung

Die vorliegende Offenbarung betrifft eine Kratzleiste für eine Abstreifereinrichtung sowie eine Abstreifervorrichtung zur Verminderung von Anhaftungen an einer mit einem Ballen zusammenwirkenden Walze einer landwirtschaftlichen Rundballenpresse. Ferner betrifft die vorliegende Offenbarung eine landwirtschaftliche Rundballenpresse zur Herstellung von Rundballen.

In CA 2 547 896 A1 wird eine Abstreifereinrichtung für ein Transportband offenbart, wobei die Abstreifereinrichtung quer zur Laufrichtung des Transportbandes eingerichtet ist.

Bekannte Abstreifereinrichtungen werden häufig an Rundballenpressen eingesetzt, welche bewegliche Teile aufweisen, die mit durch die Rundballenpressen zu verarbeitendem Pressgut in Berührung kommen. Die Abstreifereinrichtungen weisen Kratzleisten auf, die mit den beweglichen Teilen der Rundballenpresse zusammenwirken, um Anhaftungen von Pressgut und anderem Material, wie Schmutz, Erde, Pressgutresten etc. entgegenzuwirken, solchen vorzubeugen oder bereits bestehende Anhaftungen oder Ablagerungen zu entfernen. Bei den bewegliche Teilen handelt es sich häufig um eine oder mehrere drehbare Walzen. Es sind aber auch Abstreifereinrichtungen bekannt, die entsprechend mit Gurten bzw. Riemen einer Rundballenpresse zusammenwirken.

Derartige Rundballenpressen werden sowohl im landwirtschaftlichen als auch industriellen Bereich eingesetzt. Entsprechende landwirtschaftliche Rundballenpressen dienen beispielsweise zur Bildung von Erntegutballen, beispielsweise in der Art von Rundballen, und erzeugen häufig zumindest im wesentlichen rundzylindrische Ballen aus Erntegut, beispielsweise in der Art von Stroh, Heu, Häckselgut etc.. Industrielle Rundballenpressen finden Verwendung bei der Verdichtung von Müll, Textilien oder anderen Stoffen bzw. bei deren Pressung zu Ballen.

Abstreifereinrichtungen weisen üblicherweise eine Kratzleiste und einen Kratzleistenträger auf, wobei die Kratzleiste an dem Kratzleistenträger, der beispielsweise an einem Rahmen oder einem Gehäuse einer Rundballenpresse vorgesehen sein kann, durch Befestigungsmittel, beispielsweise in der Art von Verschraubungen, gehalten wird. Da Kratzleisten üblicherweise vorgesehen sind, um Anhaftungen von beweglichen Teilen, wie Walzen oder Riemen, zu entfernen oder auch um einem Aufbauen von Anhaftungen vorzubeugen bzw. entgegenzuwirken, ist zwischen der Walze und der Kratzleiste ein für diese Aufgabe geeigneter und üblicherweise möglichst geringer Abstand vorzusehen. Nutzt sich die Kratzleiste während des Einsatzes ab, verändern sich die Maschineneinstellungen und/oder die Erntebedingungen oder wird eine andere oder neue Kratzleiste montiert, so kann es notwendig sein, diesen Abstand zu verändern bzw. einzustellen. Um eine möglichst gute Funktion der Kratzleiste zu gewährleisten, sollte der Abstand der Kratzleiste zu der Walze möglichst über die gesamte Breite zumindest in etwa gleich weit sein. Es ist hierzu bekannt, die die Kratzleiste und den Kratzleistenträger verbindenden Befestigungsmittel, welche üblicherweise in der Art von Verschraubungen ausgeführt sind, zu lösen und die Kratzleiste zu verschieben. Eine derartige Einstellung ist aufwändig und kann mehrfaches Nachstellen erfordern.
Eine zu lösende Aufgabe wird darin gesehen, eine Kratzleiste, eine Abstreifereinrichtung und eine entsprechende landwirtschaftliche Rundballenpresse der eingangs genannten Art anzugeben, durch welche die vorgenannten Nachteile überwunden werden.

Die Aufgabe wird durch die Lehre der Patentansprüche 1, 4 bzw. 7 gelöst. Weitere vorteilhafte Ausgestaltungen und Weiterbildungen gehen aus den Unteransprüchen hervor.
Es wird eine Kratzleiste für eine Abstreifereinrichtung offenbart, mit wenigstens einem drehbaren Stellmittel zur linearen Verstellung der Kratzleiste gegenüber einem Kratzleistenträger einer Abstreifereinrichtung, wobei die Kratzleiste wenigstens eine sich im Wesentlichen in der Verstellrichtung der Kratzleiste erstreckende Führungsnut aufweist, in der ein stationäres Führungsmittel derart aufnehmbar ist, dass sich die Kratzleiste gegenüber dem Führungsmittel verschieben lässt. Weist eine Kratzleiste für eine zuvor beschriebene Abstreifereinrichtung ein drehbares Stellmittel zur linearen Führung der Kratzleiste gegenüber dem Kratzleistenträger auf, so kann dies eine Verstellung bzw. Einstellung der Kratzleiste vereinfachen. Das Stellmittel ist mit Bezug auf die Kratzleiste drehbar gelagert, vorzugsweise in einer Aussparung der Kratzleiste drehbar aufgenommen.

Zur Unterstützung einer gleichmäßigen Verstellung weist das Stellmittel Mittel zur Verstellung der Kratzleiste entlang einer exzentrischen Führungsbahn auf. Die exzentrische Führungsbahn erstreckt sich vorzugsweise schneckenförmig, oder zumindest annähernd kreisevolvent von einem Bereich zumindest nahe einem Mittelpunkt M des Stellmittels in Richtung eines Randbereichs des Stellmittels. Auf diese Weise kann eine gleichmäßige Bewegung der Kratzleiste und somit eine einfache Abstandseinstellung von Kratzleiste und beweglichem Bauteil erreicht bzw. unterstützt werden.
Besonders günstig ist es, wenn das Stellmittel mit Bezug auf die Kratzleiste drehbar gelagert ist, wobei das Stellmittel in einer Aussparung der Kratzleiste drehbar aufgenommen wird. Dabei kann das Stellmittel in der Form einer Stellscheibe mit einem kreisförmigen Querschnitt und/oder einer im Wesentlichen einer Dicke der Kratzleiste entsprechenden Dicke ausgeführt sein.

Vorzugsweise sind zumindest zwei Stellmittel vorgesehen, welche spiegelsymmetrisch zu einer Längsachse (L) der Kratzleiste angeordnet sind. Im Hinblick auf eine gleichmäßige Führung der Kratzleiste über ihre gesamt Breite bzw. zur gleichmäßigen Verstellung eines Abstands bzw. Spalts zwischen der Kratzleiste und dem beweglichen Bauteil ist es besonders günstig, zwei oder mehr Stellmittel vorzusehen.

Eine Abstreifereinrichtung zur Verminderung von Anhaftungen an einem beweglichen Bauteil einer landwirtschaftlichen Rundballenpresse, insbesondere einer mit einem Ballen zusammenwirkenden Walze, weist eine Kratzleiste, einen Kratzleistenträger und wenigstens ein Befestigungsmittel zur Verbindung der Kratzleiste mit dem Kratzleistenträger auf. Ist darüber hinaus wenigstens ein drehbares Stellmittel vorgesehen, das geeignet ist, die Kratzleiste gegenüber dem Kratzleistenträger linear zu führen, so kann in einfacher Art und Weise eine möglichst kontrollierte lineare Verstellung der Kratzleiste mit Bezug auf die Abstreifereinrichtung bzw. den Kratzleistenträger erzielt und ein Abstand zwischen der Kratzleiste und dem beweglichen Bauteil eingestellt werden. Es ist denkbar, dass hierzu das Stellmittel gedreht und durch die Drehung des Stellmittels eine lineare Bewegung der Kratzleiste bewirkt wird. Es ist aber auch möglich, dass eine Bewegung der Kratzleiste durch das drehbare Stellmittel linear geführt wird. Ist ein zumindest im Wesentlichen stationäres Führungsmittel vorgesehen, welches in einer sich zumindest im Wesentlichen in einer Verstellrichtung der Kratzleiste erstreckenden Führungsnut verschiebbar aufgenommen wird, so kann die Drehführung des Stellmittels in einfacher Weise mit einer Linearführung des Führungsmittels überlagert werden, um so eine kontrollierte Bewegung der Kratzleiste zu erreichen, so dass sich die Kratzleiste gegenüber dem stationären Führungsmittel verschieben lässt, wobei durch Verdrehen des wenigstens einen drehbaren Stellmittels die Kratzleiste gegenüber dem Kratzleistenträger linear verstellt wird. Eine Verstellung ist sowohl manuell als auch motorisch möglich, auch eine automatische Verstellung ist denkbar. Das bewegliche Bauteil kann beispielsweise eine vorzugsweise drehbare Walze sein. Es ist aber auch denkbar, dass es sich um ein beispielsweise umlaufendes Bauteil, wie einen Gurt oder einen Riemen handelt. Auch andere Ausbildungen des beweglichen Bauteils sind denkbar.

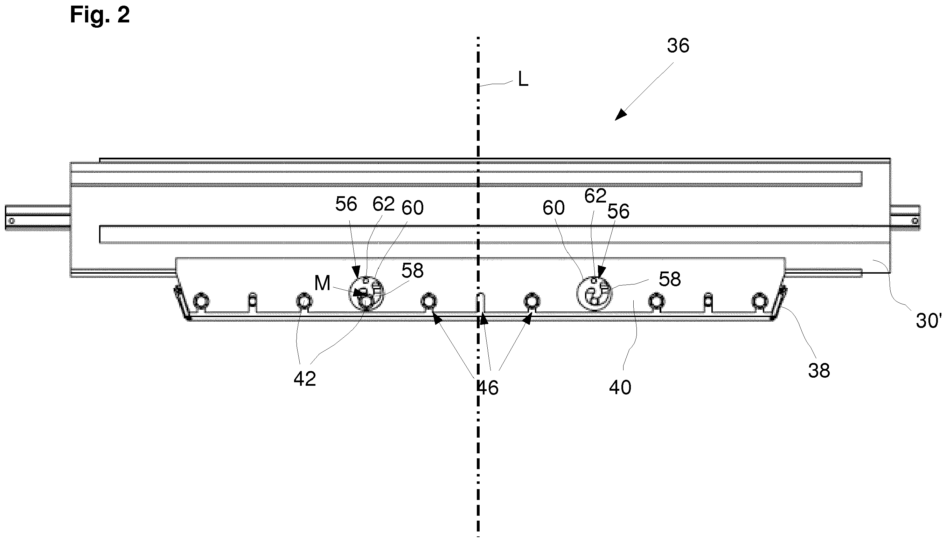

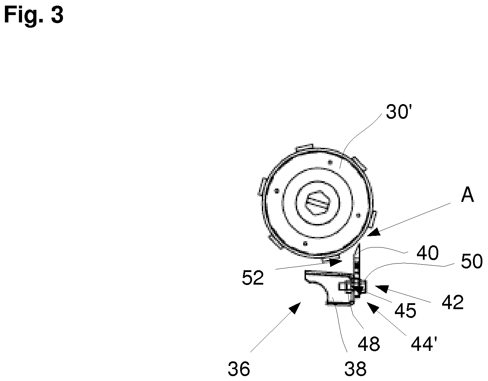

Ist ein mit dem Stellmittel zusammenwirkendes Führungsmittel vorgesehen, so kann dies vorzugsweise zumindest im Wesentlichen stationär an dem Kratzleistenträger bzw. der Kratzleiste vorgesehen sein. Das Führungsmittel wird vorzugsweise durch das Befestigungsmittel, insbesondere durch eine die Kratzleiste mit dem Kratzleistenträger verbindende Schraube bestimmt, wodurch die Anzahl an Bauteilen gering gehalten werden kann Es ist aber auch denkbar, ein derartiges Führungsmittel unabhängig von dem Befestigungsmittel, beispielsweise in der Art eines an der Kratzleiste bzw. dem Kratzleistenträger fest oder lösbar, beispielsweise mittels eines Gewinde, angebrachten Stifts vorzusehen.
Es ist denkbar, dass das Stellmittel mit Bezug auf die Kratzleiste bzw. den Kratzleistenträger drehbar gelagert ist. Wird das Stellmittel aber in einer Aussparung der Kratzleiste drehbar aufgenommen, so sind keine weiteren Befestigungsmittel notwendig. Das Stellmittel kann vielmehr in einfacher Art und Weise während eines Zusammenbaus der Abstreifereinrichtung oder auch bei einer Montage einer Kratzleiste an dem Kratzleistenträger in eine Aussparung in der Kratzleiste eingelegt werden. Optional ist es aber auch denkbar, Sicherungsmittel vorzusehen, welche beispielsweise einem Herausfallen der Stellscheibe während einer Montage entgegenwirken können. Besonders günstig im Hinblick auf eine drehbare Aufnahme des Führungsmittels ist es, dieses in der Art einer Stellscheibe mit einem im Wesentlichen kreisförmigen Querschnitt auszubilden. Weist das Stellmittel bzw. die Stellscheibe alternativ oder auch darüber hinaus eine zumindest im Wesentlichen der Dicke der Kratzleiste entsprechende Dicke auf, so kann es sich in die Kratzleiste einfügen und beispielsweise Verschmutzungen bzw. Verschleiß eine verringerte Angriffsfläche bieten.
Im Hinblick auf eine gleichmäßige Führung der Kratzleiste über ihre gesamt Breite bzw. zur gleichmäßigen Verstellung eines Abstands bzw. Spalts zwischen der Kratzleiste und dem beweglichen Bauteil ist es besonders günstig, zwei oder mehr Stellmittel vorzusehen. Eine besonders gleichmäßige Führung kann erzielt werden, wenn diese Stellmittel zumindest im Wesentlichen spiegelsymmetrisch zu einer Längsachse der Abstreifereinrichtung bzw. der Kratzleiste bezogen auf die Einsatzrichtung der Rundballenpresse angeordnet sind. Auf diese Weise kann auch einem Verkanten entgegengewirkt werden.
Vorzugsweise weist die Kratzleiste eine sich zumindest im Wesentlichen in der Verstellrichtung der Kratzleiste erstreckende Führungsnut auf, in der ein zumindest im Wesentlichen stationäres Führungsmittels verschiebbar aufgenommen werden kann. Das Stellmittel weist darüber hinaus Mittel zur Führung der Kratzleiste entlang einer exzentrischen Führungsbahn auf. Die Führungsbahn erstreckt sich vorzugsweise schneckenförmig oder zumindest annähernd kreisevolvent von einem Mittelpunkt M des Stellmittels in Richtung eines Randbereichs des Stellmittels. Weist eine Rundballenpresse, vorzugsweise eine landwirtschaftliche oder industrielle Rundballenpresse zur Herstellung von Rundballen, mit wenigstens einem beweglichen Bauteil, insbesondere einer an einem Ballen angreifenden Walze, eine Abstreifereinrichtung mit den zuvor beschriebenen Merkmalen auf, so kann dies die Handhabbarkeit der Rundballenpresse verbessern, indem gegebenenfalls eine verbesserte und/oder vereinfachte Verstellung bzw. Einstellung der Kratzleiste mit Bezug auf das bewegliche Bauteil ermöglicht wird.
Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.
Es zeigt:
- Fig. 1: eine Rundballenpresse in Seitenansicht mit einer Abstreifereinrichtung,
- Fig. 2: eine Ansicht einer oberhalb eines unteren Spalts gelegenen Walze der Rundballenpresse gemäß Figur 1, mit einer der Walze zugeordneten Abstreifereinrichtung und
- Fig. 3: eine Seitenansicht der Walze und der Abstreifereinrichtung gemäß Figur 2.

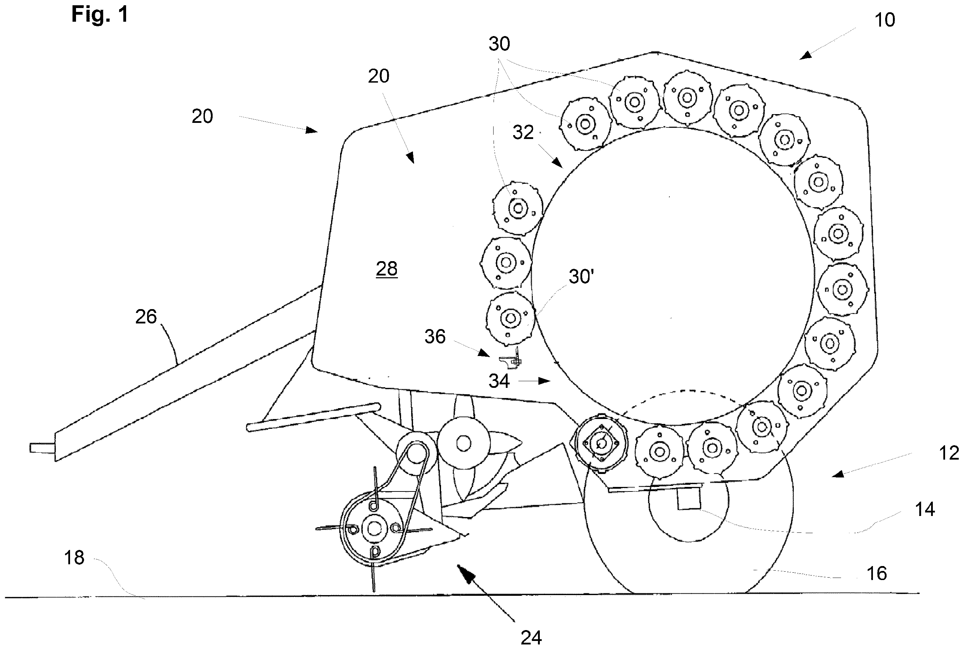

Figur 1 zeigt eine Rundballenpresse 10 zur Erzeugung eines Presserzeugnisses in der Art eines Ballens Die gezeigte Ballenpresse ist in der Art einer Rundballenpresse ausgebildet und kann sowohl im landwirtschaftlichen als auch im industriellen Bereich zur Herstellung eines üblicherweise als Rundballen bezeichneten, insbesondere rundzylindrischen Ballens aus Erntegut , aber auch aus Müll, Papier, Stoff bzw. Gewebe, Baumwolle, Tabak etc. eingesetzt werden. Eine solche Rundballenpresse 10 kann von einem nicht gezeigten Arbeitsfahrzeug, vorzugsweise in der Art eines Ackerschleppers, gezogen werden oder auch selbstfahrend ausgebildet sein.
Die Rundballenpresse 10 weist ein Fahrgestell 12, welches sich über eine Achse 14 mit Rädern 16 auf dem Untergrund 18 abstützt, ein Gehäuse 20 mit Seitenwänden, eine Erntegutzufuhrvorrichtung 24 und eine Deichsel 26, mittels der die Rundballenpresse 10 an das nicht gezeigte Arbeitsfahrzeug angeschlossen werden kann, auf.
Innerhalb des Gehäuses 20 ist eine Presskammer 28 vorgesehen, die sich zwischen den beiden Seitenwänden erstreckt und von einer Vielzahl von zumindest im Wesentlichen auf einem Kreis gelegenen Walzen 30 umgeben wird, wobei die Walzen 30, im vorderen Bereich der Rundballenpresse 10 einen oberen Spalt 32 für eine nicht gezeigte Bindeeinrichtung und einen unteren Spalt 34 für die Erntegutzufuhrvorrichtung 24 belassen.
Einer oberhalb des unteren Spalt 34 gelegenen Walze 30' ist eine Abstreifereinrichtung 36 zugeordnet, welche einen Kratzleistenträger 38 und eine Kratzleiste 40 aufweist.
Es wird nun auch auf Figuren 2 und 3 Bezug genommen, in denen die Walze 30', der Kratzleistenträger 38 und die Kratzleiste 40 detaillierter dargestellt werden. Die Kratzleiste 40 ist an dem Kratzleistenträger 38 mittels Befestigungsmitteln 42 verstellbar festlegbar. Die Befestigungsmittel 42 können in der Art von Schrauben 44, vorzugsweise von Sechskantschrauben, ausgebildet sein, die die Kratzleiste 40 im Betriebszustand zumindest im Wesentlichen fest an dem Kratzleistenträger 38 halten, beispielsweise indem sie Öffnungen 45 (nur andeutungsweise dargestellt) in dem Kratzleistenträger 38 durchdringen und in einenends offene Führungsnuten 46 in der Kratzleiste 40 eingreifen, um mit Muttern 48 zusammenzuwirken, die auf einer einem Schraubenkopf 50 der Schrauben 44 gegenüberliegenden Seite 52 des Kratzleistenträgers 38 angeordnet sind. Zur besseren Verdeutlichung wird die bezogen auf Figur 2 rechte Schraube 44 ohne ihren vorzugsweise sechskantförmigen Schraubenkopf 50 dargestellt. Zur Veränderung bzw. Einstellung eines Abstands A zwischen der Kratzleiste 40 und der Walze 30' sind die Befestigungsmittel 42 lösbar vorgesehen, vorzugsweise in der Art, dass die Schrauben 44 bezogen auf die jeweilige Mutter 48 gelöst werden können. Es ist alternativ denkbar, dass die Befestigungsmittel 42 derart mit dem Kratzleistenträger 38 zusammenwirken, dass die Schrauben 44 in in dem Kratzleistenträger 38 vorgesehene Gewinde (nicht gezeigt) eingreifen.

Es sind darüber hinaus als Stellscheiben ausgebildete Stellmittel vorgesehen, welche in kreisförmigen Aussparungen 56 der Kratzleiste 40 frei drehbar aufgenommen werden; insbesondere sind sie in die Kratzleiste 40 eingelegt. Alternativ können die Stellmittel an der Kratzleiste 40 aber auch anderweitig drehbar befestigt sein. Gemäß dem in der Zeichnung dargestellten Ausführungsbeispiel sind zwei Stellmittel mit kreisförmigem Querschnitt vorgesehen, welche hinsichtlich einer mit Bezug auf die Betriebsrichtung der Rundballenpresse 10 Längsachse L der Kratzleiste 40 spiegelsymmetrisch angeordnet und jeweils einer der Führungsnuten 46 entsprechend zugeordnet sind. Die Stellmittel sind im Wesentlichen in der Art eines flachen Zylinderkörpers bzw. scheibenartig ausgebildet und weisen in etwa die gleiche Dicke der Kratzleiste 40 auf.

Die Stellmittel weisen sie durchdringende Langlöcher 58 auf, welche mit Bezug auf einen Mittelpunkt M des jeweiligen Stellmittels zumindest im Wesentlichen die Form einer Schnecke oder Kreisevolvente annehmen, die sich von dem Mittelpunkt M zu einem Randbereich 60 des Stellmittels hin erstreckt.
Ist die Kratzleiste 40 an dem Kratzleistenträger 38 montiert, so durchdringt jeweils eine der Schrauben 44' das Langloch 58 der zugeordneten Stellscheibe. Wie dies bereits zuvor beschrieben wurde, kann die Kratzleiste 40 an dem Kratzleistenträger 38 mittels der in die Führungsnuten 46 eingreifenden Schraube 44 und der jeweiligen Mutter 48 an dem Kratzleistenträger 38 festgelegt werden. Es ist denkbar, dass darüber hinaus Unterlegscheiben, Federscheiben oder ähnliches vorgesehen sind. Die die Stellscheiben durchdringenden Schrauben 44' legen wiederum das jeweilige Stellmittel mit Bezug auf den Kratzleistenträger 38 fest.
Im Folgenden soll nun die Funktion der Abstreifereinrichtung 36 genauer dargestellt werden:
Die Abstreifereinrichtung 36 gemäß dem in der Zeichnung gezeigten Ausführungsbeispiel dient dazu, einer Anhaftungen von Material, wie beispielsweise Schmutz, Erntegut bzw. Erntegutreste, Erde etc. entgegenzuwirken, um auf diese Weise eine möglichst optimale Funktion der gezeigten Rundballenpresse 10 bzw. insbesondere der Walze 30' sicherzustellen. Hierdurch kann beispielsweise eine regelmäßige Bewegung des Ballens 12 und/oder eine möglichst gleichmäßig Zufuhr eines nicht dargestellten Binde- oder Umhüllungsmaterials unterstützt werden.
Hierzu reicht die Kratzleiste 40 möglichst dicht an die rotierende Walze 30' heran, um so anhaftendes Material abzukratzen und/oder eine Anhaftung zu verhindern. Um eine möglichst gute Funktion der Abstreifereinrichtung 36 zu gewährleisten, ist der Abstand A zwischen der Kratzleiste 40 und der Walze 30' verstellbar vorgesehen.
Soll der Abstand A verringert werden, da dieser beispielsweise durch Abnutzung der Kratzleiste 40 zu groß geworden ist oder weil sich beispielsweise die Erntebindungen verändert haben, so wird die Kratzleiste 40 an die Walze 30' heran- bzw. zu einer Vergrößerung des Abstands A von dieser weggeführt. Bei einer Montage einer neuen oder alternativen Kratzleiste 40 oder auch im Rahmen einer Wartung kann es notwendig sein, den Abstand (neu) zu justieren.
Hierzu werden die Befestigungsmittel 42 gelöst, wodurch die Kratzleiste 40 mit Bezug auf den Kratzleistenträger 38 verschoben werden kann. Die Schrauben 44 führen die Kratzleiste 40 mit Bezug auf die Betriebsrichtung der Rundballenpresse 10 in Längsrichtung in den Führungsnuten 46.
Zur eigentlichen Verstellung der Kratzleiste 40 mit Bezug auf den Kratzleistenträger 38 kann beispielsweise manuell an der Kratzleiste 40 und/oder an dem Stellmittel angegriffen werden. Alternativ ist eine motorische und/oder automatische Verstellung denkbar.
Wird die Kratzleiste 40 verschoben, so bewegen sich die Führungsnuten 46 in der Kratzleiste 40 entlang der in dem Kratzleistenträger 48 gehaltenen Schrauben 44. Gleichzeitig gleiten die Stellmittel 54 bzw. die Langlöcher 58 in den Stellscheiben entlang der entsprechenden Schrauben 44', wodurch die Stellscheibe 54 um ihren Mittelpunkt M in Rotation versetzt wird und in der Aussparung 56 in der Kratzleiste 40 dreht. Da die Langlöcher 58 sich von dem Mittelpunkt M des Stellmittels allgemein exzentrisch in Richtung des Randbereichs 60 erstrecken bzw. gemäß dem in den Figuren der Zeichnung dargestellten Ausführungsbeispiel in der Art einer sich von dem Mittelpunkt M in Richtung des Randbereichs 60 erstreckenden Schnecke bzw. genauer in Form einer Kreisevolvente ausgebildet sind, resultiert die Drehung einer der Stellscheiben in einer linearen Bewegung des Stellmittels und somit der Kratzleiste 40. Wie es in Figur 2 dargestellt wird, sind gemäß der bevorzugten Ausführungsform zwei Stellscheiben vorgesehen. Wird die Kratzleiste 40 verschoben, so bewegen sich die Stellmittel zumindest im Wesentlichen synchron, wodurch eine über die gesamte Breite B der Kratzleiste gleichmäßige Verstellung des Abstands A bezogen auf die Walze 30' erzielt werden kann. Es ist aber auch möglich nur ein oder auch mehrere Stellmittel vorzusehen. Darüber hinaus können an einem oder allen Stellmitteln Angriffspunkte 62 zur Vereinfachung eines manuellen oder auch motorischen Drehens der Stellmittel vorgesehen sein. Hierbei kann es sich beispielsweise um Gewindemuttern handeln, in die eine entsprechende, nicht dargestellte Schraube eingeschraubt werden kann, die einer Bedienungsperson als Griff dienen kann.

## Patentansprüche

1. Kratzleiste (40) für eine Abstreifereinrichtung (36), mit wenigstens einem drehbaren Stellmittel zur linearen Verstellung der Kratzleiste (40) gegenüber einem Kratzleistenträger (38) einer Abstreifereinrichtung, wobei die Kratzleiste (40) wenigstens eine sich im Wesentlichen in der Verstellrichtung der Kratzleiste (40) erstreckende Führungsnut (46) aufweist, in der ein stationäres Führungsmittel derart aufnehmbar ist, dass sich die Kratzleiste gegenüber dem Führungsmittel verschieben lässt, **dadurch gekennzeichnet, dass** das Stellmittel Mittel zur Verstellung der Kratzleiste (40) entlang einer exzentrischen Führungsbahn aufweist, die sich vorzugsweise schneckenförmig oder zumindest annähernd kreisevolvent von einem zumindest nahe einem Mittelpunkt M des Stellmittels gelegenen Bereich in Richtung eines Randbereichs (60) des Stellmittels erstreckt.

2. Kratzleiste (40) nach Anspruch 1, **dadurch gekennzeichnet, dass** das Stellmittel mit Bezug auf die Kratzleiste (40) drehbar gelagert ist, wobei das Stellmittel in einer Aussparung (56) der Kratzleiste (40) drehbar aufgenommen wird und wobei das Stellmittel in der Form einer Stellscheibe mit einem kreisförmigen Querschnitt und/oder einer im Wesentlichen einer Dicke der Kratzleiste (40) entsprechenden Dicke ausgeführt ist.

3. Kratzleiste (40) nach einem der Ansprüche 1 oder 2, **dadurch gekennzeichnet, dass** zumindest zwei Stellmittel vorgesehen sind, welche vorzugsweise spiegelsymmetrisch zu einer Längsachse (L) der Kratzleiste (40) angeordnet sind.

4. Abstreifereinrichtung (36) zur Verminderung von Anhaftungen an einer mit einem Ballen zusammenwirkenden Walze (30') einer landwirtschaftlichen Rundballenpresse (10), mit einer Kratzleiste (40) nach einem der Ansprüche 1 bis 3, einem Kratzleistenträger (38) und mit wenigstens einem Befestigungsmittel (42) zur Verbindung der Kratzleiste (40) mit dem Kratzleistenträger (38), wobei an dem Kratzleistenträger (38) wenigstens ein stationäres Führungsmittel angeordnet ist, welches in der Führungsnut (46) aufgenommen ist, so dass sich die Kratzleiste gegenüber dem stationären Führungsmittel verschieben lässt, wobei durch Verdrehen des wenigstens einen drehbaren Stellmittels die Kratzleiste (40) gegenüber dem Kratzleistenträger (38) linear verstellt wird.

5. Abstreifereinrichtung (36) nach Anspruch 4, wobei das Führungsmittel durch das Befestigungsmittel (42) ausgebildet ist.

6. Abstreifereinrichtung (36) nach Anspruch 5, wobei das Befestigungsmittel (42) durch eine die Kratzleiste (40) mit dem Kratzleistenträger (38) verbindende Schraube (44) ausgebildet ist.

7. Landwirtschaftliche Rundballenpresse zur Herstellung von Rundballen, mit wenigstens einem beweglichen Bauteil, insbesondere einer mit einem Ballen (12) zusammenwirkenden Walze (30, 30'), **gekennzeichnet durch** eine Abstreifereinrichtung (36) nach einem der Ansprüche 4 bis 6.

## Claims

1. Scraper strip (40) for a scraper device (36), having at least one rotatable adjusting means for linearly displacing the scraper strip (40) with respect to a scraper strip support (38) of a scraper device, wherein the scraper strip (40) has at least one guide groove (46) extending substantially in the displacement direction of the scraper strip (40), in which groove a stationary guide means can be accommodated in such a way that the scraper strip can be displaced with respect to the guide means, **characterized in that** the adjusting means comprises means for displacing the scraper strip (40) along an eccentric guide track, which extends preferably in a spiral shape or at least approximately as a circle involute, from a region at least close to a centre point M of the adjusting means in the direction of an edge region (60) of the adjusting means.

2. Scraper strip (40) according to Claim 1, **characterized in that** the adjusting means is supported so as to be rotatable relative to the scraper strip (40), wherein the adjusting means is rotatably accommodated in a recess (56) of the scraper strip (40), and wherein the adjusting means is designed in the form an adjusting disk having a circular cross section and/or having a thickness substantially corresponding to a thickness of the scraper strip (40).

3. Scraper strip (40) according to one of Claims 1 and 2, **characterized in that** at least two adjusting means are provided, which are preferably disposed with mirror symmetry with respect to a longitudinal axis (L) of the scraper strip (40).

4. Scraper device (36) for reducing adhesions on a roller (30') of an agricultural round baler (10), which roller interacts with a bale, comprising a scraper strip (40) according to one of Claims 1 to 3, a scraper strip support (38) and comprising at least one fastening means (42) for connecting the scraper strip (40) to the scraper strip support (38), wherein disposed on the scraper strip support (38) is at least one stationary guide means, which is accommodated in the guide groove (46) such that the scraper strip can be displaced with respect to the stationary guide means, wherein the scraper strip (40) is linearly displaced with respect to the scraper strip support (38) by rotating the at least one rotatable adjusting means.

5. Scraper device (36) according to Claim 4, wherein the guide means are formed by the fastening means (42).

6. Scraper device (36) according to Claim 5, wherein the fastening means (42) is formed by a screw (44) connecting the scraper strip (40) to the scraper strip support (38).

7. Agricultural round baler for producing round bales, comprising at least one movable component, in particular a roller (30, 30') interacting with a bale (12), **characterized by** a scraper device (36) according to one of Claims 4 to 6.

## Revendications

1. Barre de grattage (40) pour dispositif de raclage (36), présentant au moins un moyen rotatif d'ajustement qui ajuste linéairement la barre de grattage (40) par rapport à un support (38) de barre de grattage d'un dispositif de raclage,
la barre de grattage (40) présentant au moins une rainure de guidage (46) qui s'étend essentiellement dans la direction d'ajustement de la barre de grattage (40) et dans laquelle un moyen stationnaire de guidage peut être reçu de manière à ce que la barre de grattage puisse coulisser par rapport au moyen de guidage,
**caractérisée en ce que**
le moyen d'ajustement présente des moyens d'ajustement de la barre de grattage (40) le long d'une piste excentrique de guidage qui s'étend de préférence en hélice ou au moins de manière approximative suivant un cercle entre la partie située au moins à proximité du centre M du moyen d'ajustement et une bordure (60) du moyen d'ajustement.

2. Barre de grattage (40) selon la revendication 1, **caractérisée en ce que** le moyen d'ajustement est monté à rotation par rapport à la barre de grattage (40), le moyen d'ajustement étant repris à rotation dans une découpe (56) de la barre de grattage (40) et **en ce que** le moyen d'ajustement est réalisé sous la forme d'un disque d'ajustement présentant une section transversale circulaire et/ou a une épaisseur qui correspond essentiellement à une épaisseur de la barre de grattage (40) .

3. Barre de grattage (40) selon l'une des revendications 1 ou 2, **caractérisée en ce qu'**au moins deux moyens d'ajustement sont prévus et sont disposés de préférence à symétrie spéculaire par rapport à l'axe longitudinal (L) de la barre de grattage (40).

4. Dispositif de raclage (36) destiné à diminuer les adhérences sur un cylindre (30'), coopérant avec une balle, d'une presse agricole (10) à balle ronde, doté d'une barre de grattage (40) selon l'une des revendications 1 à 3, d'un support (38) de barre de grattage et d'au moins un moyen de fixation (42) qui relie la barre de grattage (40) au support (38) de barre de grattage, au moins un moyen stationnaire de guidage étant disposé sur le support (38) de barre de grattage et étant repris dans la rainure de guidage (46) de telle sorte que la barre de grattage puisse coulisser par rapport au moyen stationnaire de guidage, une rotation du ou des moyens rotatifs d'ajustement déplaçant linéairement la barre de grattage (40) par rapport au support (38) de barre de grattage.

5. Dispositif de raclage (36) selon la revendication 4, dans lequel le moyen de guidage est formé par le moyen de fixation (42).

6. Dispositif de raclage (36) selon la revendication 5, dans lequel le moyen de fixation (42) est formé par une vis (44) qui relie la barre de grattage (40) au support (38) de barre de grattage.

7. Presse agricole à balles rondes destinée à former des balles rondes et présentant au moins un composant mobile, en particulier un cylindre (30, 30') coopérant avec les balles (12), **caractérisée par** un dispositif de raclage (36) selon l'une des revendications 4 à 6.
